# EUROPEAN PATENT APPLICATION

(11) **EP 4 607 785 A1**
(43) Date of publication of application: **27.08.2025**
(21) Application number: 23879638.7
(22) Date of filing: 06.10.2023
(51) Int. Cl.: H02N 2/06, G05B 11/00, G06N 10/00

(54) **ACTUATOR COMPRISING QUANTUM-DRIVEN CONTROL UNIT**

(30) Priority: 17.10.2022 JP 2022166378
(71) Applicant: CANON KABUSHIKI KAISHA, Tokyo 146-8501 (JP)
(72) Inventor: SUMIOKA, Jun, Tokyo 146-8501 (JP)
(74) Representative: Canon Europe Limited
(86) International application number: PCT/JP2023/036459
(87) International publication number: WO 2024/084992

(57) **Abstract**

The present invention is directed to improving controllability of an actuator having non-linear characteristics. An actuator according to the present invention for solving the issue includes a first member, a second member configured to operate by driving of the first member, a measurement unit configured to measure a state of the second member, and a quantum-driven control unit configured to, with a signal based on a target state indicated in an instruction issued by an instruction unit and the measured state as input, output a control amount for driving the first member by a quantum operation, wherein the second member operates by driving of the first member with the control amount as input.

## Description

### TECHNICAL FIELD

The present invention relates to an actuator including a quantum-driven control unit. More specifically, the present invention relates to an actuator that is operated by control based on a quantum gate operation using quantum bits.

### BACKGROUND ART

As a next-generation technology following Al (Artificial Intelligence), a quantum computing technology has been studied in recent years (Patent Literatures 2, 3, and 4). The quantum computing technology is a promising technology with which a significant reduction in computation time can be expected compared to classical computers that perform binary arithmetic. As specific applications, financial, material calculation, data mining, and other fields have been studied. The quantum computing technology has a potential of being applied to a wide variety of fields, such as a field of controlling an actuator, by utilizing characteristics of quantum operation.

A vibration-type actuator will be described as an example of an actuator. The vibration-type actuator is a non-electromagnetically driven motor configured to apply an alternating-current voltage to an electro-mechanical energy conversion element such as a piezoelectric element coupled to an elastic body to cause the element to generate a high-frequency vibration and to extract vibration energy thereof as continuous mechanical motion.

The vibration-type actuator has excellent motor performance, such as small size and light weight, high accuracy, and low speed and high torque. However, because the vibration-type actuator has non-linear motor characteristics, it is difficult to model the vibration-type actuator, and since controllability thereof changes depending on driving conditions and a temperature environment, some measures for control need to be taken. Further, the vibration-type actuator has many control parameters, such as a frequency, a phase difference, and a voltage, and thus an adjustment thereof can be complicated.

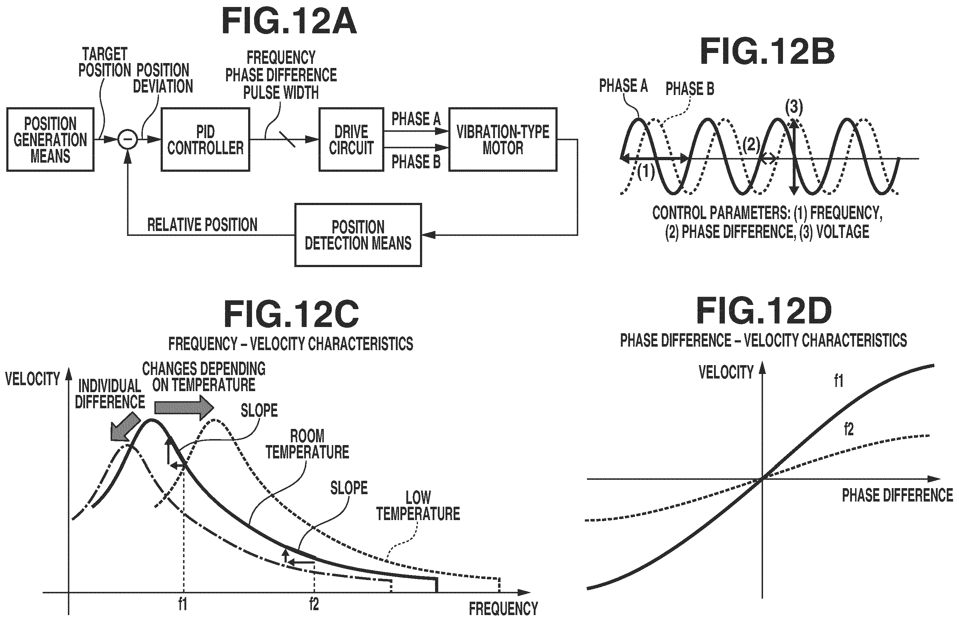

Fig. 12A illustrates an example of a conventional vibration-type actuator based on general PID control. Two-phase alternating-current voltage signals are output from a drive circuit. A frequency, a phase difference, and a voltage amplitude (variable depending on a pulse width) of each of the alternating-current voltage signals are controlled to thereby control the velocity of a vibration-type motor (Fig. 12B). A position deviation that is a difference between a target position and a detected relative position is input to a PID controller, and a control amount (frequency, phase difference, pulse width) calculated by PID based on the position deviation is sequentially output for every control sampling, thereby a position feedback control is performed.

Fig. 12C is a graph schematically illustrating frequency-velocity characteristics of the conventional vibration-type actuator based on general PID control. A slope of a velocity curve varies depending on a velocity range to be used in the vibration-type actuator, and thus there is a need to adjust a control gain. For example, a state where the slope at a frequency f1 in a high-velocity range is different from the slope at a frequency f2 in a low-velocity range is illustrated. Fig. 12D illustrates a comparison of phase difference-velocity characteristics between the low-velocity range (f2) and the high-velocity range (f1) described above. The slope in the high-velocity range (frequency band in the vicinity of f1 of a curve indicated by a solid line) is large, so that control sensitivity is high, while the slope in the low-velocity range (frequency band in the vicinity of f2 of the curve indicated by the solid line) is small, so that the sensitivity is low. Further, when an ambient temperature changes, for example, when the temperature changes from a room temperature to a low temperature, the frequency is shifted to a high-frequency side based on temperature characteristics of the piezoelectric element. In this case, the velocity and the slope differ from those at the time of driving at the same frequency, so that the control performance changes. Accordingly, there is a need to optimize the control gain so as to obtain the favorable controllability, but the method of adjusting the control gain is complicated.

Various modern control applications such as a neural network have been studied to improve the controllability of a vibration-type actuator. Patent Literature 1 discusses a control method for selecting rotation axis vectors for reaching a target position with a minimum drive amount in control of a vibration-type actuator capable of multi-degree-of-freedom driving. The control method uses a neural network as an inverse model of the vibration-type actuator and performs control by inputting the rotation axis vectors to the neural network and outputting a phase and an amplitude. Parameters for the neural network are learned to approximate characteristics of a modeled driving estimation simulator.

However, the control using the neural network discussed in Patent Literature 1 needs to create a model based on a transfer function for the vibration-type actuator, which is difficult to be completely matched with a behavior of an actual apparatus. Even if a completely-matched model is obtained, the controllability may be impaired due to variations in performance depending on an individual difference or a temperature environment, or changes with time due to long-term use.

Further, Patent Literature 2 discusses analytically deriving a control function assuming that a controlled body is a part of a three-body vibration system that moves under a conservative force designed to satisfy a Grover's algorithm. However, due to a complicated algorithm, this is unsuitable for actuator control.

Patent Literature 3 discusses a quantum search for parameters for controlling a plant. Patent Literature 4 discusses a control method for applying microwave pulses to a spin system model by operation of a resonator circuit so that the control method can be applied to a superconducting resonator using pulse electron spin resonance (ESR) or the like using a quantum system model. However, these are also unsuitable for actuator control.

### Citation List

### Patent Literature

Patent Literature 1: Japanese Patent Application Laid-Open No. 2004-129458
Patent Literature 2: Japanese Patent Application Laid-Open No. 2016-45595
Patent Literature 3: Japanese Unexamined Patent Application Publication (Translation of PCT Application) No. 2003-526855
Patent Literature 4: Japanese Patent No. 6682507

### SUMMARY OF INVENTION

### Technical Problem

The present invention is directed to improving controllability of an actuator and providing an actuator having a robust performance with high accuracy even if driving conditions and a temperature environment vary.

### Solution to Problem

According to an aspect of the present invention, an actuator includes a first member, a second member configured to operate by driving of the first member, a measurement unit configured to measure a state of the second member, and a quantum-driven control unit configured to, with a signal based on a target state indicated in an instruction issued by an instruction unit and the measured state as input, output a control amount for driving the first member by a quantum operation, wherein the second member operates by driving of the first member with the control amount as input.

### Advantageous Effects of Invention

According to the present invention, it is possible to improve controllability of an actuator by performing control based on a probability using a quantum operation.

### BRIEF DESCRIPTION OF DRAWINGS

[Fig. 1A] Fig. 1A is a diagram illustrating an actuator including a quantum-driven control unit according to an exemplary embodiment of the present invention.
[Fig. 1B] Fig. 1B is a diagram illustrating the actuator including the quantum-driven control unit according to the exemplary embodiment of the present invention.
[Fig. 1C] Fig. 1C is a diagram illustrating the actuator including the quantum-driven control unit according to the exemplary embodiment of the present invention.
[Fig. 1D] Fig. 1D is a diagram illustrating the actuator including the quantum-driven control unit according to the exemplary embodiment of the present invention.
[Fig. 2A] Fig. 2A illustrates an example of a quantum gate operation in the quantum-driven control unit.
[Fig. 2B] Fig. 2B illustrates an example of the quantum gate operation in the quantum-driven control unit.
[Fig. 3A] Fig. 3A is a diagram illustrating a position feedback control of a vibration-type actuator including the quantum-driven control unit according to the present exemplary embodiment.
[Fig. 3B] Fig. 3B is a diagram illustrating the position feedback control of the vibration-type actuator including the quantum-driven control unit according to the present exemplary embodiment.
[Fig. 3C] Fig. 3C is a diagram illustrating the position feedback control of the vibration-type actuator including the quantum-driven control unit according to the present exemplary embodiment.
[Fig. 4] Fig. 4 is a diagram illustrating details of an operation method of the quantum-driven control unit.
[Fig. 5A] Fig. 5A is a diagram illustrating an algorithm for a state shader operation.
[Fig. 5B] Fig. 5B is a diagram illustrating the algorithm for the state shader operation.
[Fig. 5C] Fig. 5C is a diagram illustrating the algorithm for the state shader operation.
[Fig. 6] Fig. 6 is a diagram illustrating a quantum gate operation circuit in a Grover's amplification operation and inverse QFT.
[Fig. 7A] Fig. 7A illustrates an example in a case where a quantum-driven control is performed using an output table.
[Fig. 7B] Fig. 7B illustrates the example in the case where the quantum-driven control is performed using the output table.
[Fig. 8A] Fig. 8A illustrates a second exemplary embodiment in a case where a quantum-driven control is performed using an approximation operation unit.
[Fig. 8B] Fig. 8B illustrates the second exemplary embodiment in the case where the quantum-driven control is performed using the approximation operation unit.
[Fig. 9A] Fig. 9A illustrates a third exemplary embodiment in a case where a quantum-driven control is performed using a quantum gate operation unit and an output table.
[Fig. 9B] Fig. 9B illustrates the third exemplary embodiment in a case where a quantum-driven control is performed using a quantum gate operation unit and an output table.
[Fig. 10A] Fig. 10A illustrates a result of driving the vibration-type actuator using the quantum-driven control according to the present invention.
[Fig. 10B] Fig. 10B illustrates the result of driving the vibration-type actuator using the quantum-driven control according to the present invention.
[Fig. 11A] Fig. 11A illustrates a result of simulation of transfer characteristics of the vibration-type actuator including the quantum-driven control unit.
[Fig. 11B] Fig. 11B illustrates the result of simulation of the transfer characteristics of the vibration-type actuator including the quantum-driven control unit.
[Fig. 12A] Fig. 12A illustrates an example of a conventional vibration-type actuator based on general PID control.
[Fig. 12B] Fig. 12B illustrates the example of the conventional vibration-type actuator based on the general PID control.
[Fig. 12C] Fig. 12C illustrates the example of the conventional vibration-type actuator based on the general PID control.
[Fig. 12D] Fig. 12D illustrates the example of the conventional vibration-type actuator based on the general PID control.
[Fig. 13] Fig. 13 illustrates an example where the actuator is used for a lens drive mechanism for autofocus driving of a camera.
[Fig. 14A] Fig. 14A illustrates an example where the actuator is used to drive a lens or an image pickup element during hand shake correction.
[Fig. 14B] Fig. 14B illustrates the example where the actuator is used to drive a lens or an image pickup element during hand shake correction.
[Fig. 15] Fig. 15 illustrates an example where the actuator is used to drive an automatic stage of a microscope.

### DESCRIPTION OF EMBODIMENTS

The present inventors have devised a technique for newly introducing a concept of probability into a control amount of an actuator using a quantum gate operation used in quantum computing technology. The technique will be described in detail below with reference to the drawings.

### (First Exemplary Embodiment)

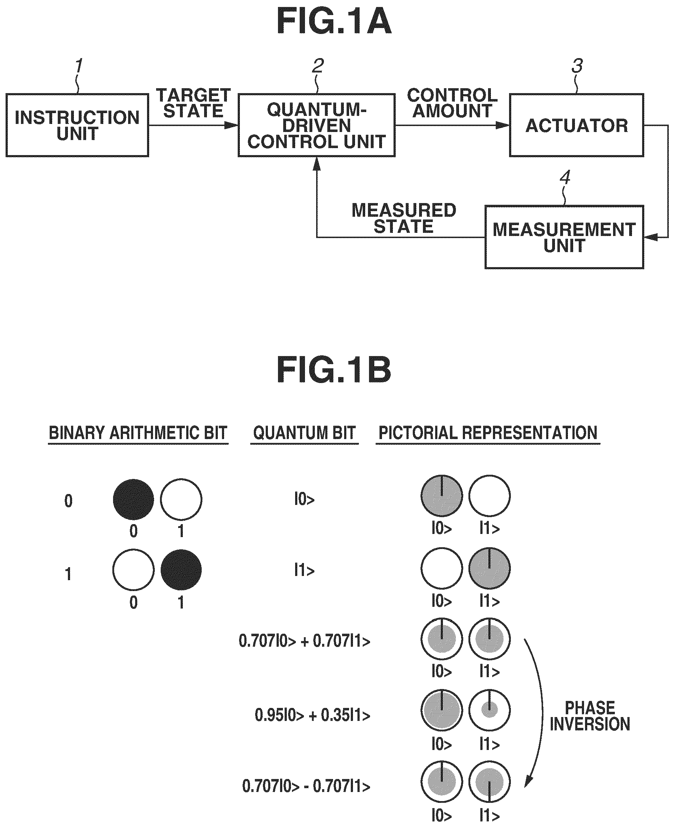

Figs. 1A to 1D are diagrams each illustrating an actuator including a quantum-driven control unit according to an exemplary embodiment of the present invention.

In Fig. 1A, a quantum-driven control unit 2, with a target state indicated by an instruction unit 1 and a measured state measured by a measurement unit 4 as input, performs a quantum gate operation using quantum bits, and outputs a control amount to an actuator 3. The actuator 3 includes a first member configured to be driven based on the control amount, and a second member configured to be operated by driving of the first member. Operation of the second member is measured by the measurement unit 4, and the operation is fed back as the measured state to the quantum-driven control unit 2.

Fig. 1B illustrates quantum bits for use in calculation by the quantum-driven control unit 2. A bit in conventional binary arithmetic uses two states of "0" and "1" as illustrated in the left drawing in Fig. 1B in calculation. On the other hand, a quantum bit uses not only "0" and "1" but also a superposition state by an H-gate (Hadamard gate), in which an amplitude and a phase of "0" and "1" of the quantum bit can be freely changed, making it possible to create an infinite number of quantum states. In Fig. 1B, the amplitude is represented by the area of a gray portion in a circle representing a Bloch sphere, and the phase is represented by a direction of a bar line that is rotatable 360 degrees about the center of the circle. Representation of a quantum bit is expressed by the amplitude and a sign of the phase of "0" and "1" in a quantum state. For example, "0.707" indicates that the area is 70.7% and a minus sign indicates that the phase is inverted by 180 degrees. The square of the amplitude indicates a probability of the quantum bit in the quantum state being read out. When the amplitude is "0.707", the probability is 50%.

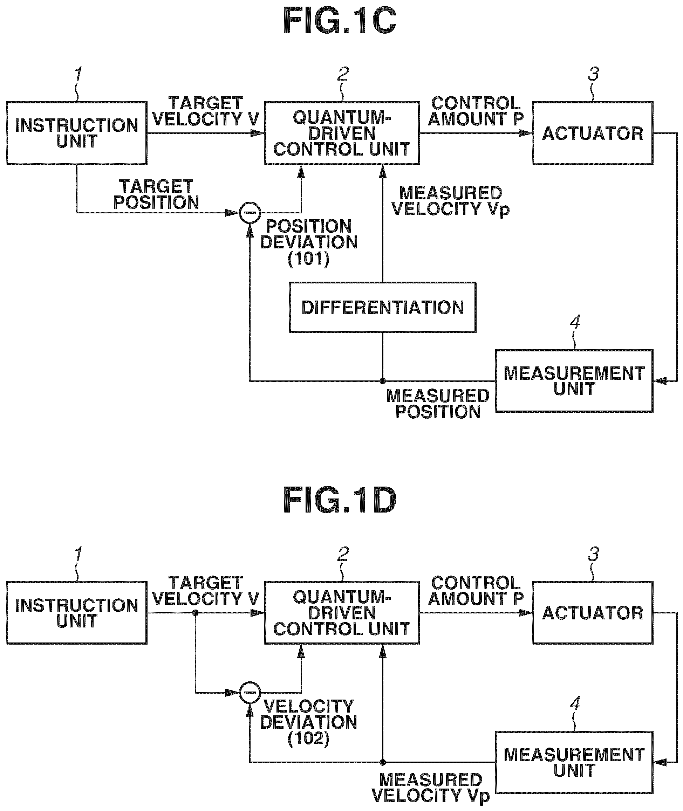

Fig. 1C illustrates a configuration example in a case where a position feedback control is performed. The quantum-driven control unit 2, by using a target velocity V indicated by the instruction unit 1 and a position deviation between a measured position by the measurement unit 4 and a target position as input, performs a quantum gate operation, and outputs a control amount P to the actuator 3. On the other hand, a measured velocity Vp obtained by performing differentiation on the measured position with respect to time is input to the quantum-driven control unit 2 as frequency distribution data for the control amount P, and is used in calculation of a probability table to be described below. Note that the measured velocity Vp can be directly measured by the measurement unit 4.

Fig. 1D illustrates a configuration example in a case where a velocity feedback control is performed. The quantum-driven control unit 2, with the target velocity V indicated by the instruction unit 1 and a velocity deviation between the measured velocity Vp by the measurement unit 4 and the target velocity V as input, performs a quantum gate operation, and outputs the control amount P to the actuator 3. Similarly, the measured velocity Vp is input to the quantum-driven control unit 2 as frequency distribution data for the control amount P, and is used in calculation of the probability table.

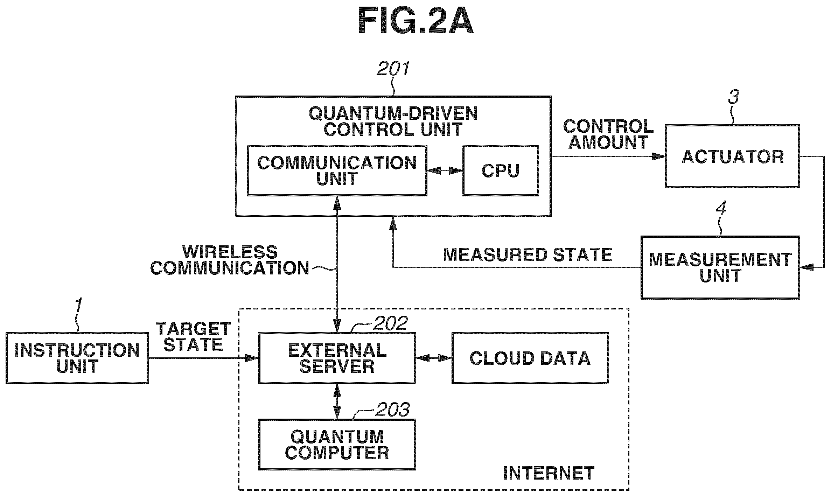

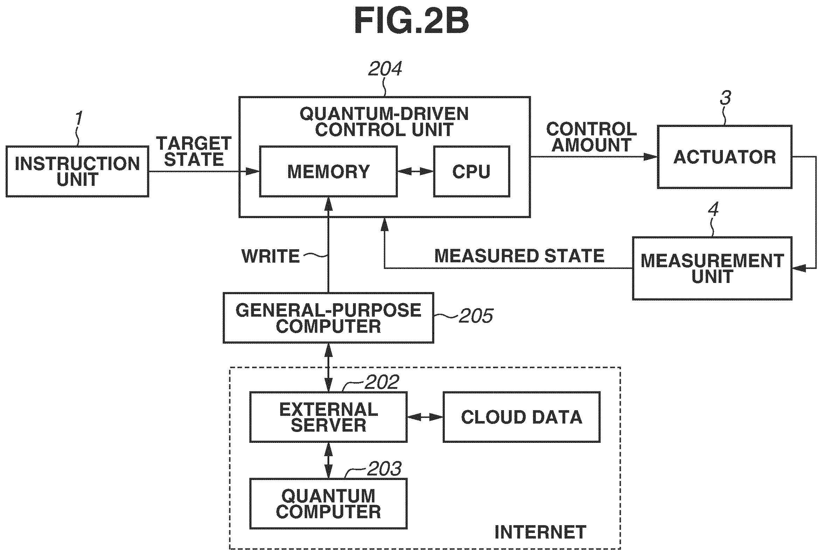

Figs. 2A and 2B each illustrate an example of the quantum gate operation in the quantum-driven control unit.

Fig. 2A illustrates an example where the quantum gate operation is performed via an external server. A quantum-driven control unit 201 includes a communication unit that is connectable to an external server 202 and performs wireless communication.

Alternatively, a wired communication may be used. The external server 202 is connected to a quantum computer 203 and cloud data, which are located on the outside through the Internet. As the quantum computer 203, a quantum gate-based quantum computer using superconducting quantum bits and microwave pulses, or a quantum simulator capable of highspeed operation may be used. The quantum computer 203 executes the quantum gate operation based on the target state indicated by the external instruction unit 1, and outputs the control amount obtained by a CPU via the communication unit to the actuator 3, thereby performing the control. The CPU performs a part corresponding to the conventional binary arithmetic, such as calculation of a deviation and adjustment of a control gain based on the measured state by the measurement unit 4, and the external quantum computer 203 performs the other quantum gate operation. Such control using also the external server has a disadvantage of a reduced control rate due to being rate-limited by a communication rate. However, data in the measured state can be stored in the cloud data, and information about a plurality of actuators can be controlled in a centralized manner. Accordingly, the control is also suitable for a case where a plurality of actuators is simultaneously controlled from the instruction unit 1 and is caused to operate in coordination.

Fig. 2B illustrates an example of performing the quantum gate operation using a quantum computer in advance and controlling the actuator using an operation result. This method is used in an example of the exemplary embodiment of the present invention. A quantum-driven control unit 204 includes a memory into which information is written by a general-purpose computer 205 that operates based on the binary arithmetic. The general-purpose computer 205 is connected to the external server 202 and is also connected to the external quantum computer 203 and the cloud data through the Internet. The quantum computer 203 executes the quantum gate operation based on all target states that can be indicated by the instruction unit 1, and an operation result thereof is stored as table data in the memory of the quantum-driven control unit 204. The CPU causes an output unit to output the control amount depending on the target state using the table data, and controls the actuator 3. Such a method enables the control to be performed without decreasing the control rate and takes advantage of merits of the operation using the quantum computer and the operation of the CPU based on the binary arithmetic in an environment in which functions of the operations are separated from each other.

Note that the quantum-driven control according to the present invention can be carried out using a configuration other than the above-described configuration. For example, all quantum gate operations can be performed by a controller included in the actuator depending on a level of operation function of the CPU. Alternatively, some of the quantum gate operations may be performed internally, and other of the quantum gate operations may be performed by an external quantum computer.

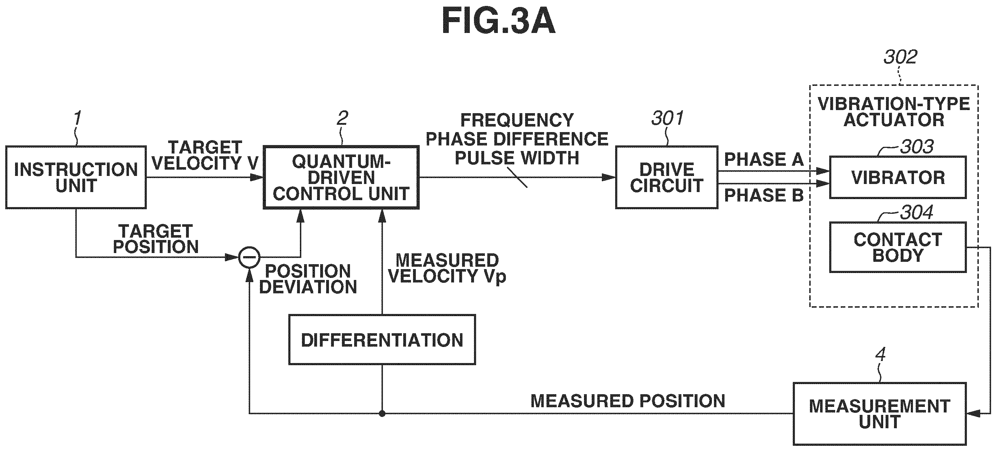

Figs. 3A to 3C are diagrams each illustrating a position feedback control of a vibration-type actuator including the quantum-driven control unit according to the present exemplary embodiment.

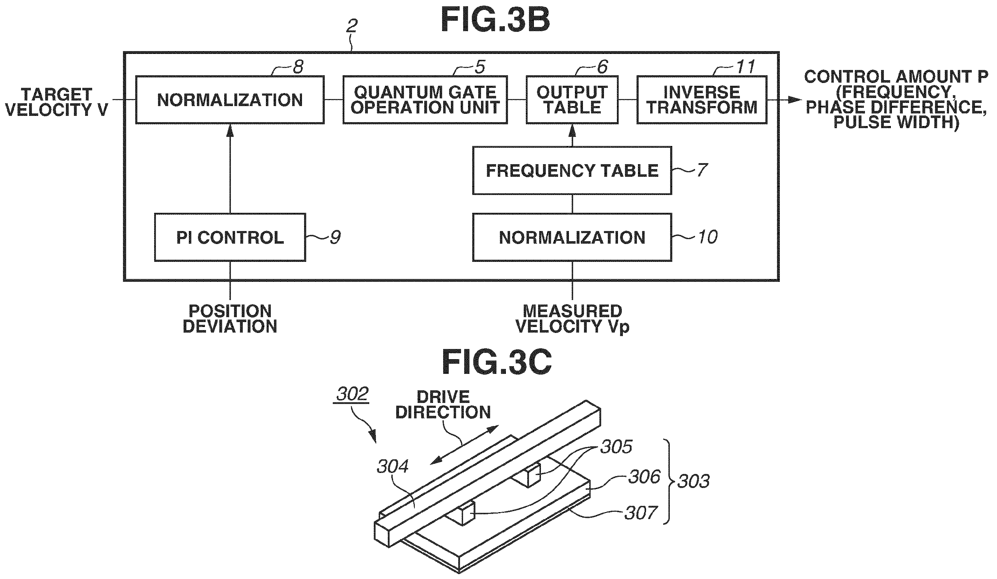

In Fig. 3A, the quantum-driven control unit 2, with the target velocity V indicated by the instruction unit 1 and the position deviation between the measured position by the measurement unit 4 and the target position as input, performs the quantum gate operation, and outputs a phase difference, a frequency, and a pulse width of the control amount to a drive circuit 301. The drive circuit 301 generates two-phase alternating-current signals based on the phase difference, the frequency, and the pulse width. The drive circuit 301 includes a booster circuit (not illustrated) including a coil and a transformer. The alternating-current signal boosted to a desired drive voltage is applied to a piezoelectric element 307 included in a vibrator 303 illustrated in Fig. 3C. A contact body 304 operates by the vibrator 303 being driven, and the measurement unit 4 such as an encoder measures the position and velocity of the contact body 304.

Fig. 3B illustrates a configuration of the quantum-driven control unit 2. An added value of the target velocity V and the position deviation is normalized with a predetermined scaling in a normalization unit 8, and is converted into a normalized value for the quantum gate operation. Herein, the position deviation refers to a value calculated by a PI control unit 9 using a predetermined control gain. The normalization unit 8 performs scaling by, for example, dividing the value by a target velocity range and multiplying the value by a maximum value of a target state value. For example, if the target velocity range is 0 to 50 mm/s and the target state value is 64 at maximum, V * 64/50 holds. The target state value is a value for use in a quantum gate operation unit to be described below. Next, a quantum gate operation unit 5 calculates a probability corresponding to the target state value, and inputs probability data to an output table 6. The output table 6 performs an operation using the probability data on the target state value and frequency data on an frequency table 7, and outputs the control amount based on the probability data. The frequency data in the frequency table 7 is data indicating a frequency distribution of a measured state value relative to a control value, where the measured state value is obtained by performing normalization 10 on the measured velocity Vp in a similar manner.

Specifically, the measured state is normalized with a scaling that is substantially the same as that for the value of the target state, thereby obtaining the measured state value.

Lastly, the control value is scaled to a range of the control amount P by an inverse transform 11, and is then output. The inverse transform 11 performs scaling by dividing the value by the maximum value of the control value and multiplying the value by the control amount range. For example, in the case of a phase difference, when the control amount range is 0 to 90 degrees and the control value is 64 at maximum, the control value * 90/64 holds. Thus, the control according to the present exemplary embodiment has such a feature that probability data indicating the target state value corresponding to the target state is associated with the control amount P for controlling the actuator.

A vibration-type actuator 302 illustrated in Fig. 3C includes the vibrator 303 including an elastic body 306 and the piezoelectric element 307 of an electro-mechanical energy conversion element, and the contact body 304 configured to operate by driving of the vibrator 303. When an alternating-current signal is applied to the piezoelectric element 307, two vibration modes in an upward thrust direction and a feed direction are generated in the vibrator 303, thereby allowing the contact body 304 in a pressure contact state to operate. An elliptic motion generated in protrusions 305 includes a combination of two vibration modes, and the velocity and direction of the vibration-type actuator 302 can be controlled using the phase difference, the frequency, and the voltage amplitude (pulse width) of the two-phase alternating-current signals as the control amount.

Note that all of the phase difference, the frequency, and the pulse width may be operated as the control amount, or any one or two of the phase difference, the frequency, and the pulse width may be operated while the others may be controlled as fixed values. In the present exemplary embodiment, the control is performed by operating the phase difference and the frequency by the quantum gate operation unit and fixing the pulse width to a predetermined value.

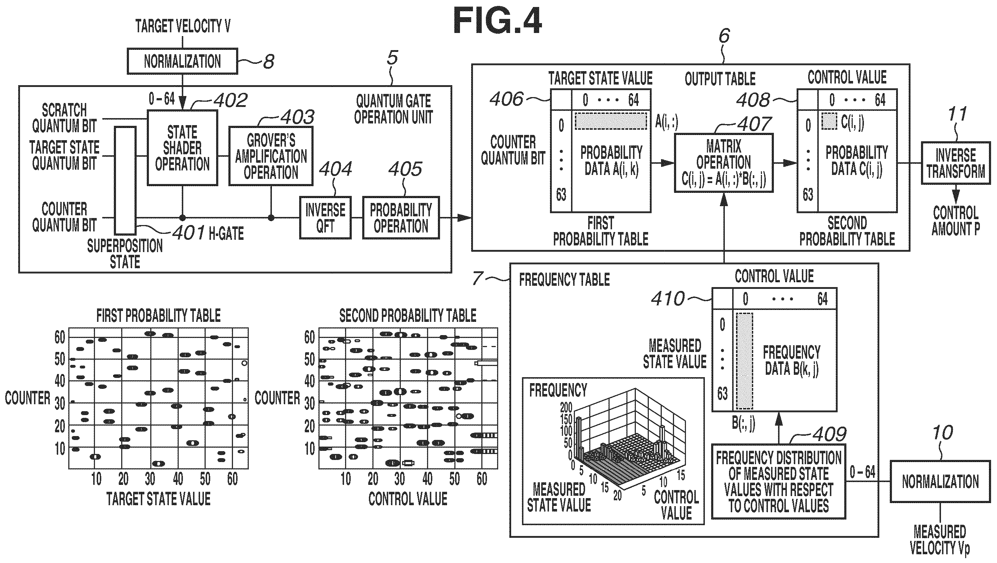

Fig. 4 is a diagram illustrating details of an operation method of the quantum-driven control unit.

As illustrated in Figs. 3A to 3C, the main operation of the quantum-driven control unit is performed by the quantum gate operation unit 5, the output table 6, and the frequency table 7.

First, the quantum gate operation unit 5 will be described. The quantum gate operation to be performed by the quantum gate operation unit 5 is performed using a target state quantum bit that is put into a superposition state by a Hadamard gate 401, and a counter quantum bit. The superposition state illustrated herein refers to a state where the quantum bit can be read as "0" or "1" with a probability of 50%. The quantum gate operation unit 5 performs the quantum gate operation based on the target state value normalized by the normalization unit 8 so that the probability of the target state value with respect to the counter quantum bit can be calculated. Specifically, a state shader operation 402, a Grover's amplification operation 403, an inverse QFT operation 404 on the counter quantum bit, and a probability operation 405 are performed.

The state shader operation 402, with the target state value as input, outputs a state shader value by an operation using a scratch quantum bit. The scratch quantum bit is a quantum bit for calculation provided to calculate the target state quantum bit by a predetermined arithmetic equation.

The Grover's amplification operation 403 performs a phase inversion on the target state quantum bit based on the probability of the state shader value, and repeatedly performs the phase inversion and an amplitude amplification based on the counter quantum bit. The Grover's amplification operation includes a flip operation and a mirror operation, and inverts the phases of the quantum bit in the superposition state and performs the amplitude amplification to transform the phase difference into a difference in magnitude of amplitude.

The inverse QFT operation 404 is an operation unit that performs an inverse QFT operation on the counter quantum bit. The inverse QFT operation is an inverse transform corresponding to QFT (quantum Fourier transform) representing a periodically-changing quantum bit in the superposition state in a frequency space, and is performed to, with the quantum bit representing the frequency space as input, transform the quantum bit into a corresponding signal and output the signal. The probability operation 405 calculates the probability of the target state value with respect to the counter quantum bit.

Next, the output table 6 will be described. The output table 6 aims to output a control value with highest probability depending on the target state value. The output table 6 includes a first probability table 406 including the probability of the target state value with respect to the counter quantum bit. The first probability table 406 is a table including probability data A (j, k) obtained by the quantum gate operation unit 5. An "i" row represents the value of the counter quantum bit, and i = 0 to 63 in six bits. A "k" column represents the target state value, and k = 0 to 64 by adding one to the 6-bit value. The reason why 65 target state values can be obtained will be described in a state shader operation to be described below. The left drawing illustrates a contour diagram graphically representing the probability of the first probability table 406. The contour diagram represents magnitude of the probability by contour lines, and a darker area indicates an area with higher probability. The contour diagram illustrates that the probability of each target state value varies with a distribution depending on the counter quantum bit. A second probability table 408 includes probability data C (i, j) indicating a result of performing a matrix operation 407 on the probability data A (j, k) and frequency data B (k, j). The second probability table 408 indicates the probability of the control value with respect to the counter quantum bit. As illustrated in the figure, C (i, j) is obtained by calculating the inner product of the i-th row data of A ("k" column = 0 to 64) and j-th column data of B ("k" row = 0 to 64). As a result of this calculation, the probability of the control value with respect to the target state value can be calculated through the counter quantum bit, and the control amount P with high probability can be output. The left drawing illustrates a contour diagram graphically representing the probability of the second probability table 408. The contour diagram illustrates that the probability of each control value varies with a distribution depending on the counter quantum bit and the control value with a high probability can be selected and output.

Lastly, the frequency table 7 will be described. A frequency distribution 409 of the measured state value with respect to the control value is calculated using the measured state values (0 to 64) obtained by performing normalization 10 on the measured state with the same scaling as the target state value and the control values (0 to 64) obtained by performing normalization on the control amount in a similar manner. As the frequency distribution, measured data obtained by driving the actuator, as illustrated in the figure, may be used. In addition, calculated data or the like using an identification model of the actuator may be used. The frequency data B (k, j) indicates the frequency of the measured velocity when a predetermined control amount is given to the actuator. Variations due to noise or external factors appear as fluctuations in the velocity and are represented as frequency data by normalization. This is applied to the above-described probability operation as a frequency table 410, thereby making it possible to output the control amount with high reliability that is insusceptible to the noise or variation factors.

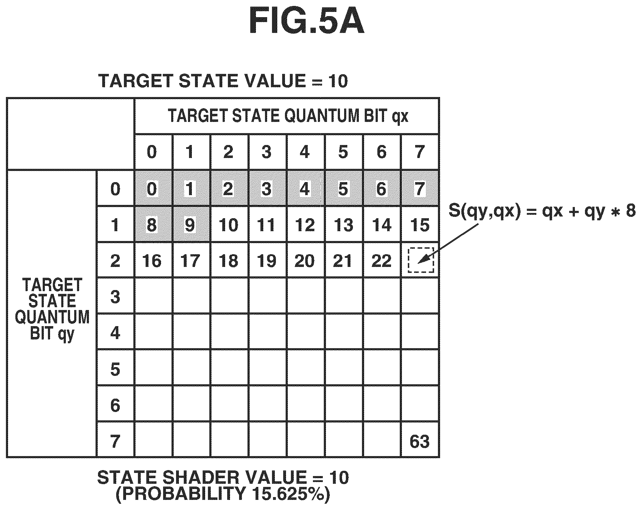

Figs. 5A to 5C each illustrate a state shader operation algorithm.

The state shader operation 402 is performed using the scratch quantum bit so that the state shader value varies depending on the target state value. The state shader value to be output represents the quantum state, and the flip operation (NOT operation and phase inversion) of the target state quantum bit is performed based on the state shader value.

Fig. 5A illustrates a method of calculating the state shader value. When the target state value is input, a predetermined operation is performed on target state quantum bits qx and qy. The target state quantum bits qx and qy are three-bit quantum bits. Values of 64 cells illustrated in the figure indicate calculation results of qx and qy, and an arithmetic equation S (qx, qy) = qx + qy * 8. If the quantum bits qx and qy are calculated, the state changes, and the bits cannot be read out. For this reason, the scratch quantum bit is used for calculation. A cell that satisfies a condition that the target state value is greater than S is a gray cell, and the number of gray cells is set as the state shader value. For example, if the target state value is "10", cells with 0 to 9 are gray cells, and the state shader value is "10". This simply indicates "10" in the conventional binary arithmetic; however, in the quantum gate operation, this is represented as a probability (10/64 = 15.625%). In other words, since qx and qy in the superposition state can stochastically take all values, if the target state value "10" is input, it indicates that the phase inversion of the target state quantum bit is performed with a probability of 15.625%. Note that the phase inversion of the target state quantum bit is repeatedly calculated depending on the value of the counter quantum bit, and the probability based on the counter quantum bit is calculated.

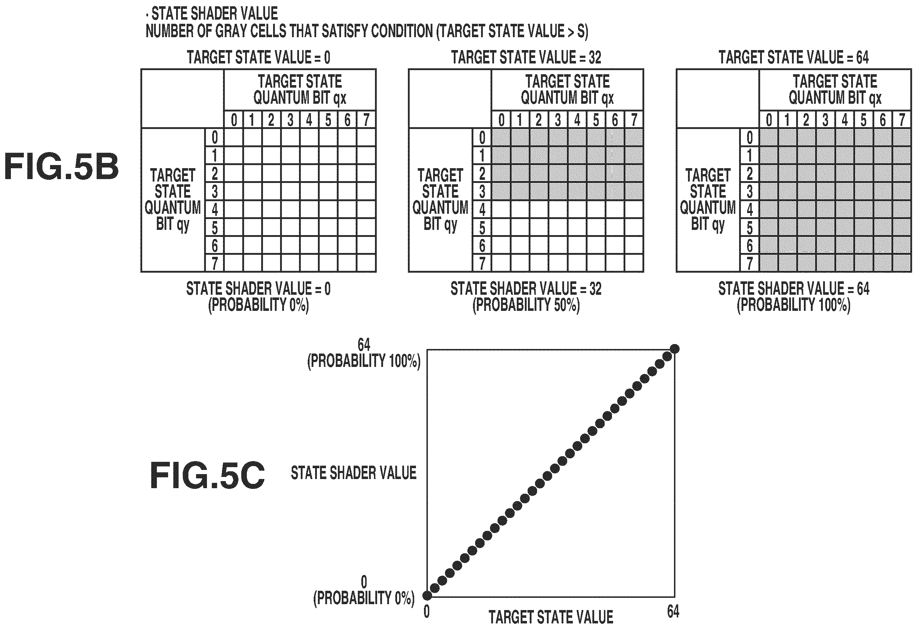

Fig. 5B illustrates changes of the state shader value (number of gray cells) in a case where target state values "0", "32", and "64" are input. The phase inversion of the target state quantum bit is performed with a probability of 0% for the target state value "0", with a probability of 50% for the target state value "32", and with a probability of 100% for the target state value "64".

Fig. 5C illustrates a relationship between the target state value and the state shader value. In the present exemplary embodiment, the arithmetic equation S is set so that the probability linearly changes with respect to the target state value, but instead may be set so that the probability non-linearly changes using an arithmetic expression such as a simple addition (qx + qy) or a sum of squares (qx^2 + qy^2).

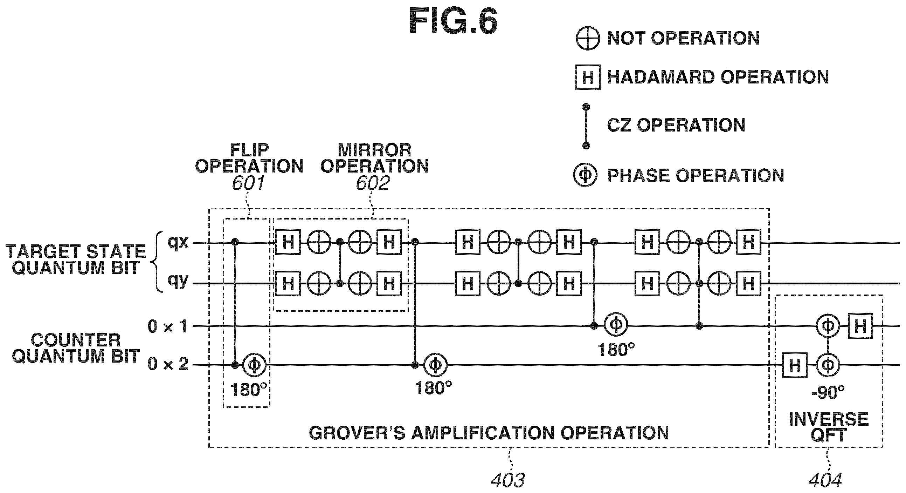

Fig. 6 is a diagram illustrating a quantum gate operation circuit for the Grover's amplification operation and inverse QFT.

As described above, a flip operation 601 of the target state quantum bit is performed based on the state shader value, and the flip operation 601 and a mirror operation 602 are repeated based on the counter quantum bit. The Grover's amplification operation 403 includes the flip operation 601 and the mirror operation 602 and is an operation of performing amplitude amplification in which the phase of the quantum bit in the superposition state is inverted and a phase difference is transformed into a difference in magnitude of amplitude. The Grover's amplification operation 403 can increase accuracy of the probability of the quantum bit to be read out.

QFT (Quantum Fourier Transform) represents a periodically-changing quantum bit in the superposition state in the frequency space. The inverse QFT 404 is an inverse transform corresponding to QFT, and with the quantum bit representing the frequency space as input, transforms the quantum bit into a corresponding signal and outputs the signal.

Note that the target state quantum bits qx and qy according to the present exemplary embodiment perform calculations with three bits each, while the counter quantum bit performs calculations with six bits. In the drawing, however, the number of bits is illustrated in a simplified manner for convenience of explanation.

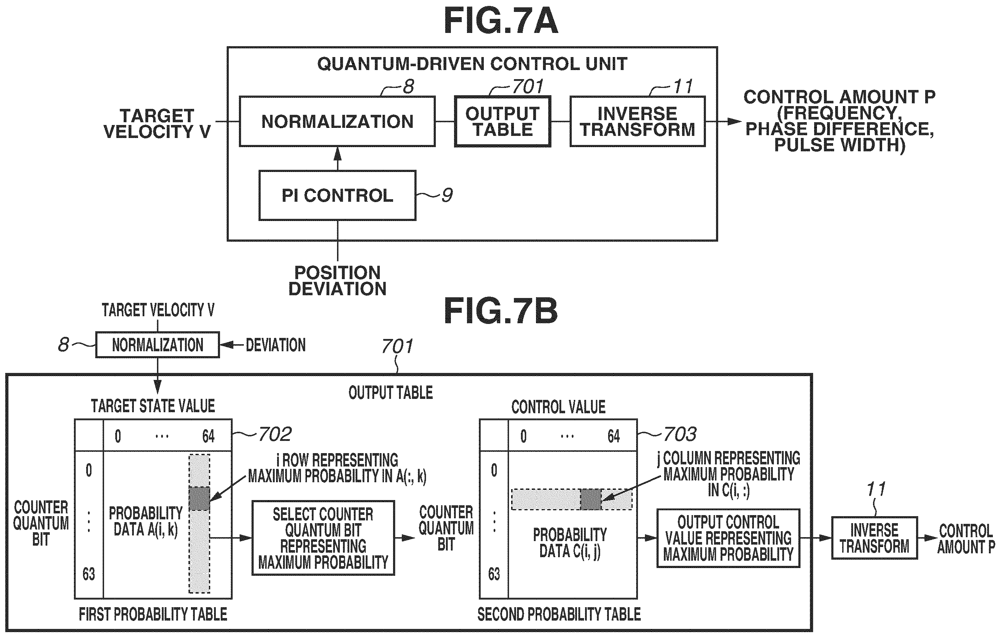

Figs. 7A and 7B each illustrate an example in a case where the quantum-driven control is performed using an output table.

In the example, the control amount is output using the first and second probability tables illustrated in Fig. 4. Accordingly, the second probability table indicates the result of operation performed in advance using the frequency table.

Fig. 7A illustrates the quantum-driven control unit according to the example. The additional value of the target velocity V and the position deviation is subjected to the normalization unit 8 with a predetermined scaling, is transformed into the target state value, and then is input to an output table 701. Because scaling in the normalization unit 8 and the inverse transform 11 is similar, the description thereof is omitted. The output table 701 selects a control value indicating a maximum probability based on the target state value and outputs the control value. The control value is scaled to the control amount range by the inverse transform 11, and the control amount P is output.

Fig. 7B illustrates an operation of the output table 701. First, in the first probability table, a counter quantum bit in the "i" row representing the maximum probability in the column "A" (:, k) of the input target state value is selected (black cell in the figure).

Next, in the second probability table, a control value in the "j" column representing the maximum probability in the row C (i, :) of the selected counter quantum bit is selected and output (black cell in the figure). This operation makes it possible to output the control value indicating the maximum probability based on the target state value.

The actuator including the quantum-driven control unit according to the present invention has been described above.

Results of applying the quantum-driven control according to the present invention to an actual apparatus will be described.

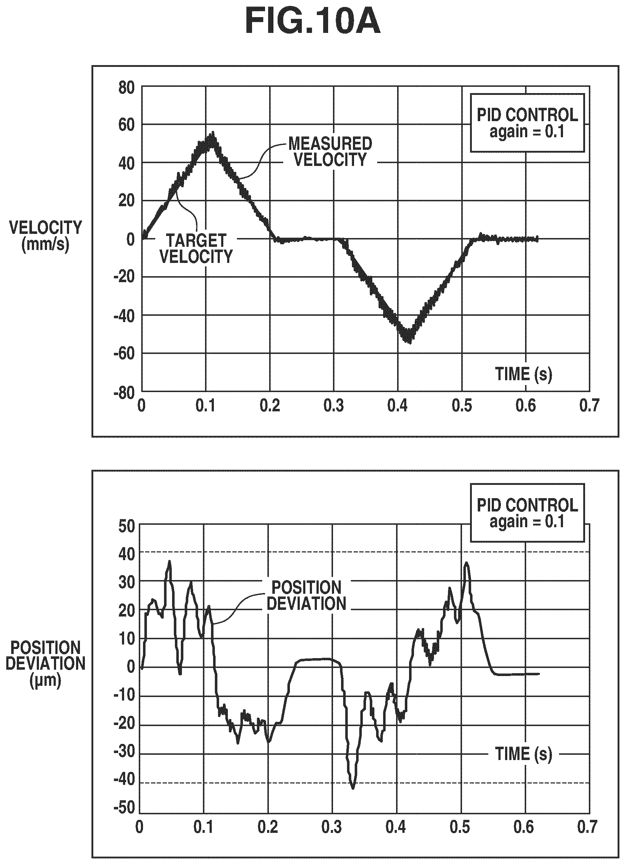

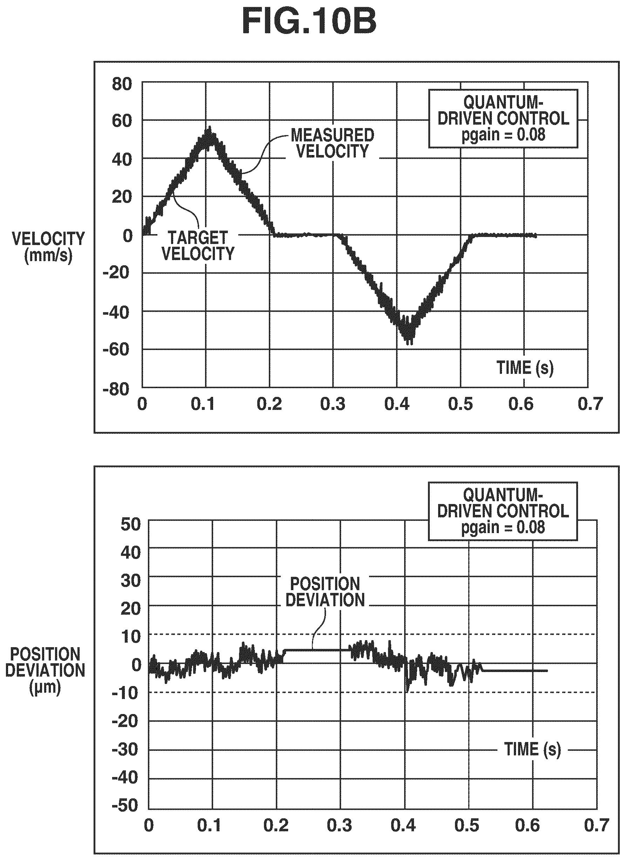

Figs. 10A and 10B each illustrate a result of driving the vibration-type actuator using the quantum-driven control according to the present invention.

Fig. 10A illustrates a result of driving using a PID control as a comparative example. As PID gains, P = 0.32, I = 0.01, and D = 0.52 are set as a proportional gain, an integral gain, and a derivative gain, respectively, and these are multiplied by an A gain (overall gain) of 0.1 and are used. An upper section represents transition of the target velocity and the measured velocity with respect to time on a horizontal axis, and a lower section represents a result of deviation between the target position and the measured position. The target velocity is given by the instruction unit to perform a reciprocating operation with a maximum velocity of 50 mm/s, an acceleration and deceleration time of 100 ms, and a suspension time of 100 ms. Fig. 10B illustrates the result of driving using the quantum-driven control. In this control, only the proportional gain is set, and P = 0.08 is used. Note that the integral gain and the derivative gain may be set. As indicated by the result of the position deviation, the quantum-driven control can reduce the position deviation and improve the control performance.

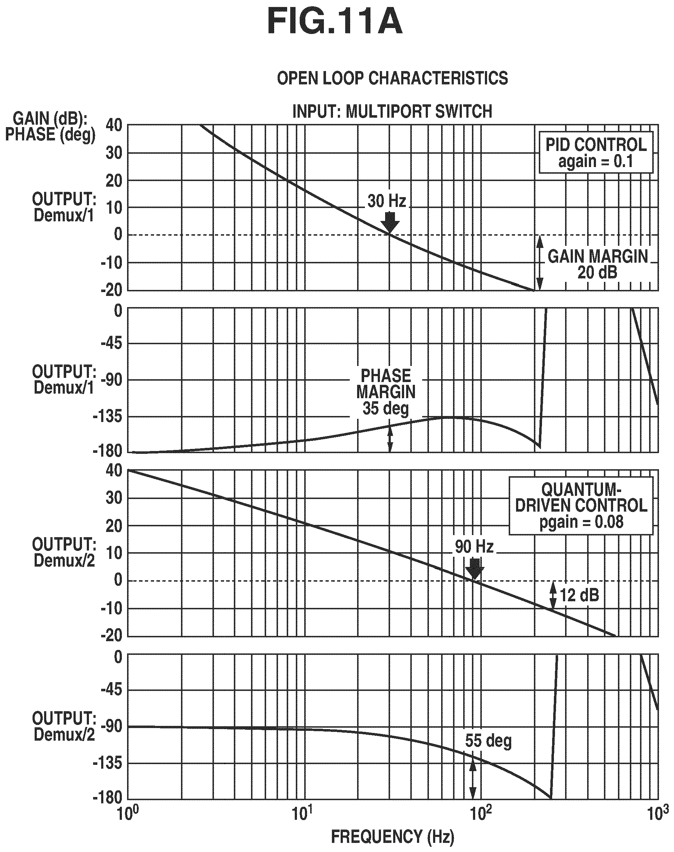

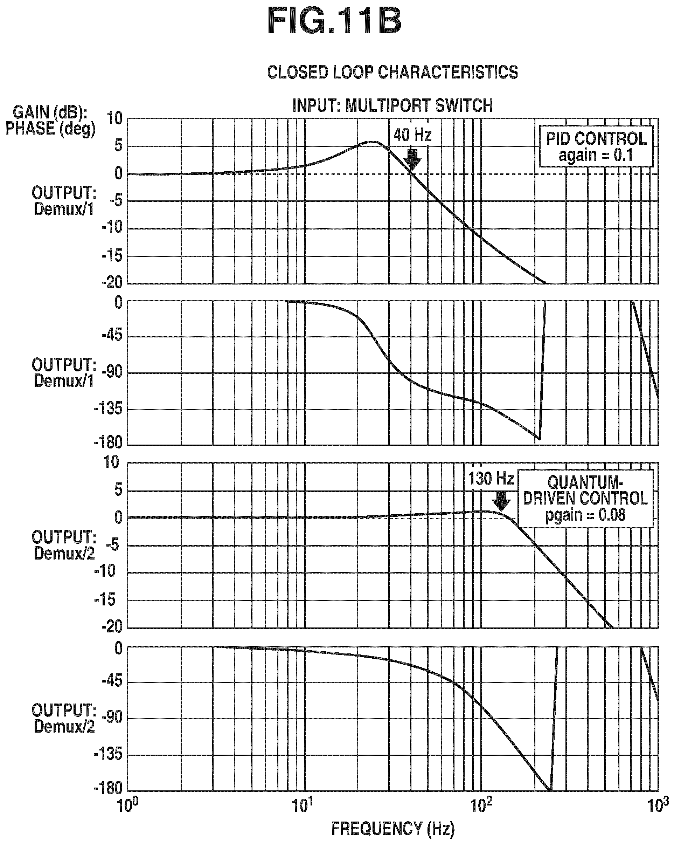

Figs. 11A and 11B each illustrate a result of simulation of transfer characteristics of the vibration-type actuator including the quantum-driven control unit.

Fig. 11A illustrates results of open-loop characteristics in comparison with PID control. An upper section in each control indicates a gain, and a lower section indicates frequency characteristics (1 Hz to 1 kHz) of a phase lag. As the PID gains, P = 0.32, I = 0.01, and D = 0.52 are set as the proportional gain, the integral gain, and the derivative gain, respectively, and these are multiplied by the A gain of 0.1 and are used. In the quantum-driven control, only the proportional gain is set, and P = 0.08 is used. A zero-crossing frequency of gain characteristics in the PID control is 30 Hz (phase margin of 35 degrees), while the zero-crossing frequency of gain characteristics in the quantum-driven control is 90 Hz (phase margin of 55 degrees), which is satisfactory. In the quantum-driven control, the low-frequency gain in the vicinity of 1 Hz can be further increased by adding the integral gain of the position deviation.

Fig. 11B similarly illustrates results of closed-loop characteristics in comparison with the PID control. The zero-crossing frequency of gain characteristics in the PID control is 40 Hz, while the zero-crossing frequency of gain characteristics in the quantum-driven control is 130 Hz, which indicates that a control with high responsiveness is enabled even in a high-frequency area.

### (Second Exemplary Embodiment)

Another exemplary embodiment of the present invention will be described.

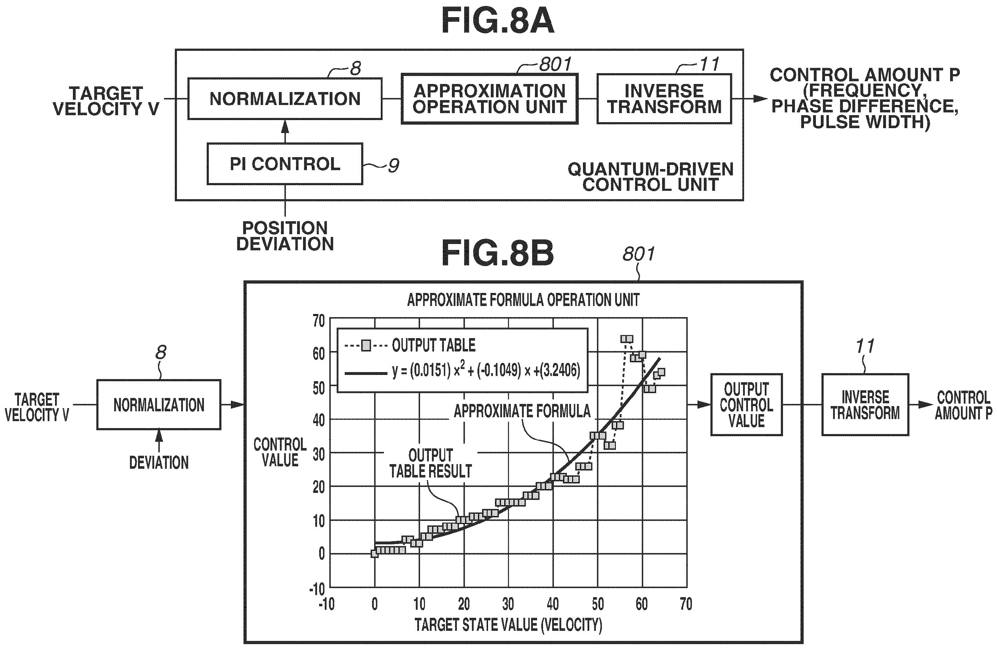

Figs. 8A and 8B illustrate a second example in a case where the quantum-driven control is performed using an approximation operation unit.

In the example, the output table 701 for outputting the control value with high probability with respect to the target state value illustrated in Figs. 7A and 7B is replaced by an approximate formula to perform the operation.

Fig. 8A illustrates the quantum-driven control unit according to the example. The additional value of the target velocity V and the position deviation is subjected to the normalization unit 8 with a predetermined scaling, is transformed into the target state value, and then is input to an approximation operation unit 801. Because scaling in the normalization unit 8 is similar, the description thereof is omitted. The approximation operation unit 801 calculates the approximate formula with the target state value as input and outputs the control value. The control value is scaled to a predetermined control amount range by the inverse transform 11, and the control amount P (frequency, phase difference, pulse width) is output.

Fig. 8B illustrates an operation of the approximation operation unit 801. The approximation operation unit 801 is replaced by the approximate formula calculated by the least squares method so that the control value approximate to the result of the output table 701 described above (square plots indicated in the graph) can be output. In this example, the approximation is performed using a quadratic function, but instead the approximation may be performed using a function other than the quadratic function. This operation makes it possible to output the control value with high probability based on the target state value.

### (Third Exemplary Embodiment)

Another exemplary embodiment of the present invention will be described.

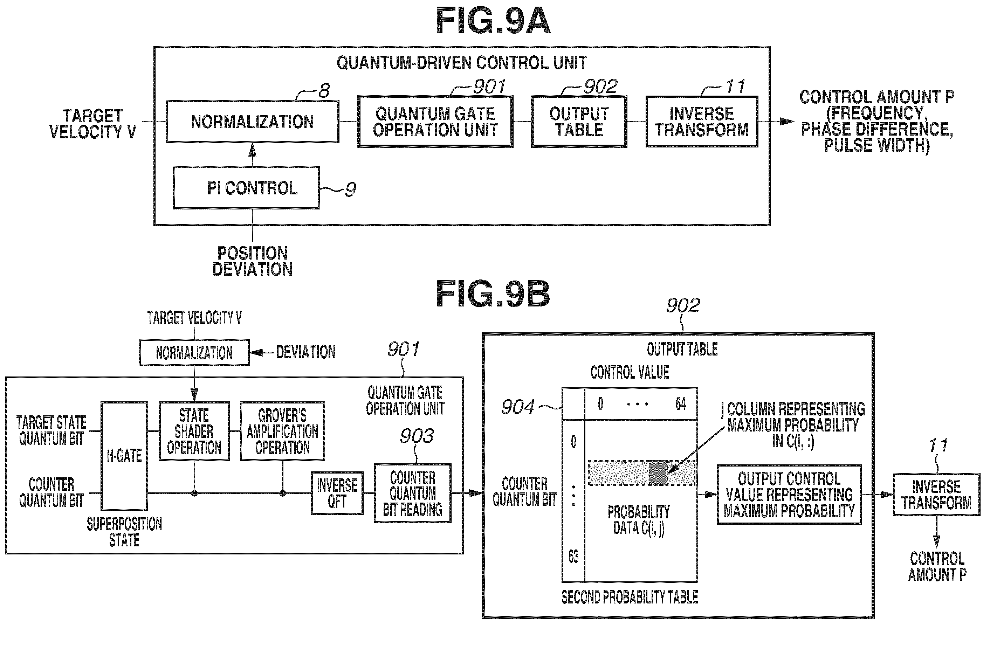

Figs. 9A and 9B each illustrate a third example in a case where the quantum-driven control is performed using a quantum gate operation unit and an output table.

Fig. 9A illustrates a configuration of the quantum-driven control unit. The additional value of the target velocity V and the position deviation is subjected to the normalization unit 8 with a predetermined scaling and is transformed into a value for performing the quantum gate operation. Because scaling in the normalization unit 8 and the inverse transform 11 is similar, the description thereof is omitted. Next, a quantum gate operation unit 901, with the target state value as input, outputs the counter quantum bit. An output table 902 outputs the control value of the maximum probability based on the value of the input counter quantum bit. Lastly, the control value is scaled to the range of the control amount P by the inverse transform 11, and the control amount P is output.

Fig. 9B illustrates an operation of each of the quantum gate operation unit 901 and the output table 902. The H-gate, the state shader operation, the Grover's amplification operation, and the inverse QFT in the quantum gate operation unit 901 are similar to those of the first example (see Fig. 4), and thus the descriptions thereof are omitted. In the quantum gate operation unit 901, the counter quantum bit is read based on the input target state value (903). The more likely the counter quantum bit to be read is to be calculated according to the target state value, the more frequently the result of reading out occurs. Next, in the output table 902, a control value in the "j" column representing the maximum probability in the row C (i, :) of the read counter quantum bit is selected and output (black cell in the figure). This operation makes it possible to output the control value indicating the maximum probability based on the target state value. Note that the counter quantum bit read in 903 stochastically varies. Accordingly, a series of operations of the quantum gate operation unit 901 and the output table 902 may be repeatedly performed, and an average value of the control values may be output.

### (Fourth Exemplary Embodiment)

The actuator including the quantum-driven control unit according to the present invention can be used for, for example, a lens drive mechanism of a camera as an optical apparatus including an optical element, a hand shake correction apparatus as an electronic apparatus, and a stage including a placement unit.

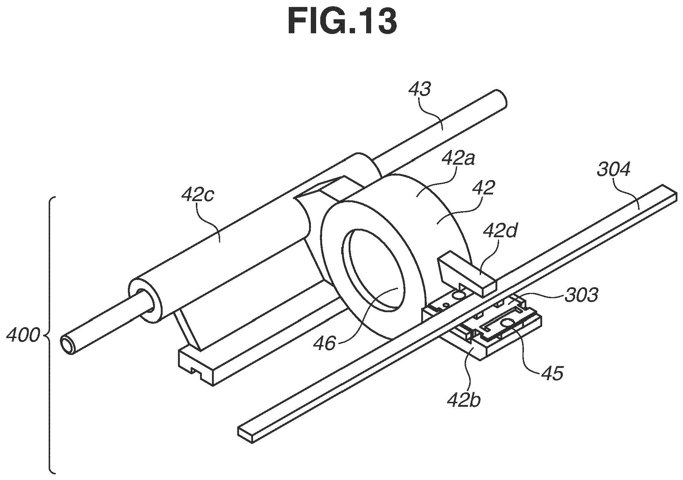

Fig. 13 illustrates an example where the actuator is used for the lens drive mechanism for performing automatic focus driving of a camera.

A lens holder drive mechanism 40 includes the vibrator 303, the contact body 304, a lens holder 42, a lens 46, and a guide bar 43 that slidably holds the lens holder 42 and is located in parallel. Both ends of the contact body 304 are fixed by a base member (not illustrated), and the vibrator 303 and the lens holder 42 are integrated and relatively move along the guide bar 43. An alternating-current voltage signal is applied from a flexible printed circuit board (not illustrated) to the vibrator 303, thereby a driving force is generated between the vibrator 303 and the contact body 304. This driving force allows the lens holder 42 to operate.

The lens holder 42 includes a cylindrical holder portion 42a, a holding portion 42b that holds and fixes the vibrator 303 and a pressurized magnet 45, and a guide portion 42c to be fitted on the guide bar 43 to thereby provide a guiding function. The pressurized magnet 45 constituting a pressurizing means includes a permanent magnet and two yokes arranged at both ends of the permanent magnet. A magnetic circuit is formed between the pressurized magnet 45 and the contact body 304, so that an attractive force is generated between the members. The pressurized magnet 45 and the contact body 304 are arranged at an interval, and the contact body 304 is arranged to be in contact with the vibrator 303. The magnetic attractive force causes a pressing force between the contact body 304 and the vibrator 303, generates the driving force, and also functions as a guide portion of the lens holder 42. A falling-off prevention portion 42d included in the lens holder 42 is brought into contact with the contact body 304 as a measure to maintain a desired position against an external force.

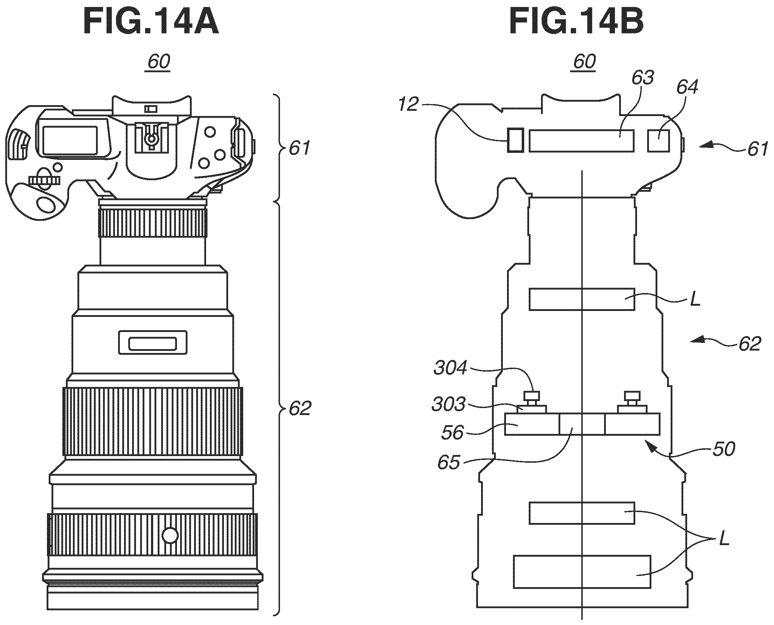

Figs. 14A and 14B each illustrate an example where the actuator is used to drive a lens or an image pickup element during hand shake correction.

Fig. 14A is a plan view (top view) illustrating an external appearance of an image capturing apparatus 60. Fig. 14B is a schematic view of an internal structure of the image capturing apparatus 60.

The image capturing apparatus 60 is roughly composed of a main body 61 and a lens barrel 62 that is detachably attached to the main body 61. The main body 61 includes an image pickup element 63 such as a charge-coupled device (CCD) sensor and a complementary metal-oxide semiconductor (CMOS) sensor to convert an optical image formed by light that has passed through the lens barrel 62 into an image signal, and a camera control microcomputer 64 that controls an overall operation of the image capturing apparatus 60. A plurality of lenses L including a focus lens and a zoom lens is arranged at predetermined positions on the lens barrel 62. The lens barrel 62 incorporates an image blur correction apparatus 50. The image blur correction apparatus 50 includes a disk member 56 and the vibrator 303 provided on the disk member 56, and an image blur correction lens 65 is arranged in a hole formed at the center of the disk member 56. The image blur correction apparatus 50 is arranged to allow the image blur correction lens 65 to move within a plane orthogonal to an optical axis of the lens barrel 62. The vibrator 303 is driven using the quantum-driven control unit 2 to move the vibrator 303 and the disk member 56 relative to the contact body 304 fixed to the barrel, thereby the correction lens is driven.

The present invention can also be used to drive a lens holder to move a zoom lens. Accordingly, the present invention can be mounted not only on an image capturing apparatus but also on an interchangeable lens for lens driving.

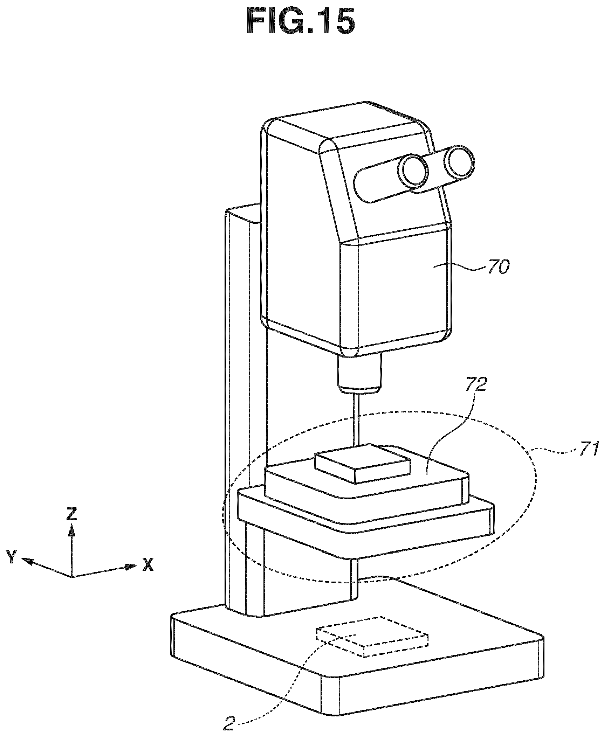

Fig. 15 illustrates an example where the actuator is used to drive an automatic stage of a microscope.

A microscope illustrated in Fig. 15 includes an imaging unit 70 incorporating an image pickup element and an optical system, and an automatic stage 71 that is provided on a base and includes a stage 72 to be moved by a vibration-type actuator. An object to be observed is placed on the stage 72, and an enlarged image is captured by the imaging unit 70. If an observation range is present in a wide range, the vibration-type actuator is driven using the quantum-driven control unit 2, thereby moving the stage 72. Thus, the object to be observed is moved in an X-direction or a Y-direction in the figure, and a large number of captured images are obtained. By a computer (not illustrated), the captured images may be combined to obtain a high-definition image with a wide observation range.

The present invention can also be configured as a system including a first member, a second member configured to operate by driving of the first member, and the control apparatus described above.

Furthermore, the present invention can also be configured as a program that causes the control apparatus to execute the above-described processes, and can also be configured as a computer-readable non-transitory storage medium storing the program.

The present invention is not limited to the above-described exemplary embodiments, and various modifications and variations can be made without departing from the spirit and scope of the present invention. Accordingly, the following claims are appended to disclose the scope of the present invention.

This application claims the benefit of Japanese Patent Application No. 2022-166378, filed October 17, 2022, which is hereby incorporated by reference herein in its entirety.

## Claims

1. An actuator comprising:
a first member;
a second member configured to operate by driving of the first member;
a measurement unit configured to measure a state of the second member; and
a quantum-driven control unit configured to, with a signal based on a target state indicated in an instruction issued by an instruction unit and the measured state as input, output a control amount for driving the first member by a quantum operation,
wherein the second member operates by driving of the first member with the control amount as input.

2. The actuator according to Claim 1, wherein the quantum-driven control unit outputs the control amount based on a quantum gate operation using a quantum bit.

3. The actuator according to Claim 1 or 2, wherein the quantum-driven control unit, with a target velocity of the second member in the target state as input, outputs the control amount.

4. The actuator according to Claim 1 or 2, wherein the quantum-driven control unit, with a signal based on a deviation between a target position of the second member in the target state and a position of the second member measured by the measurement unit as input, outputs the control amount.

5. The actuator according to Claim 1 or 2, wherein the quantum-driven control unit, with a signal based on a deviation between a target velocity of the second member in the target state and a velocity of the second member measured by the measurement unit as input, outputs the control amount.

6. The actuator according to Claim 2, wherein the quantum-driven control unit outputs a control amount associated with a probability of reading the quantum bit based on the target state.

7. The actuator according to Claim 6, wherein the quantum-driven control unit includes an output table corresponding to the probability based on the quantum gate operation.

8. The actuator according to Claim 2, wherein the quantum-driven control unit includes an approximation operation unit configured to, with the target state as input, approximate an operation result based on the quantum gate operation using a predetermined approximate formula and output the control amount based on the approximate formula.

9. The actuator according to Claim 2,
wherein the quantum-driven control unit includes a communication unit connectable to an external server, and
wherein the quantum gate operation using a quantum computer is executed via the external server.

10. The actuator according to Claim 2,
wherein the quantum-driven control unit includes a memory, and
wherein a computer based on a binary arithmetic executes the quantum gate operation by using a quantum computer via an external server, and information about an operation result is written in the memory.

11. The actuator according to Claim 2, wherein the quantum gate operation includes a counter quantum bit and a quantum bit representing the target state as a superposition state using a Hadamard gate, performs a quantum gate operation using the quantum bit based on a value corresponding to the normalized target state, and calculates a probability of the target state corresponding to the counter quantum bit.

12. The actuator according to Claim 11, wherein the quantum gate operation performs a state shader operation that outputs a state shader value by an operation using a scratch quantum bit with a value of the target state as input, a Grover's amplification operation that performs a phase inversion of the target state quantum bit based on a probability of the state shader value and repeating the phase inversion and an amplitude amplification based on the counter quantum bit, and an inverse QFT operation of the counter quantum bit.

13. The actuator according to Claim 12, wherein the scratch quantum bit is a quantum bit for calculation provided to calculate the target state by a predetermined arithmetic equation.

14. The actuator according to Claim 12, wherein the Grover's amplification operation includes a flip operation and a mirror operation, and is performed to invert a phase of a quantum bit in a superposition state and perform an amplitude amplification that transforms a phase difference into a difference in magnitude between amplitudes.

15. The actuator according to Claim 12, wherein the inverse QFT operation is an inverse transform corresponding to a quantum Fourier transform representing a periodically-changing quantum bit in a superposition state in a frequency space, and with a quantum bit representing a frequency space as input, transforms the input quantum bit into a corresponding signal and outputs the signal.

16. The actuator according to Claim 7, wherein the output table includes a first probability table including probability data on a value of the target state corresponding to the counter quantum bit.

17. The actuator according to Claim 2, wherein the quantum-driven control unit includes a frequency table including frequency distribution data on a value of the measured state corresponding to a control value obtained by normalizing the control amount and a measured state value obtained by normalizing the measured state with a scaling corresponding to a value of the target state.

18. The actuator according to Claim 17, wherein the frequency table is measured data obtained by driving the actuator.

19. The actuator according to Claim 17, wherein the frequency table is calculated data obtained by a model that identifies the actuator.

20. The actuator according to Claim 7, wherein the output table is calculated using the first probability table and the frequency table and includes a second probability table including probability data on the control value corresponding to the counter quantum bit.

21. The actuator according to Claim 1 or 2, wherein the first member is a vibrator including an elastic body and an electro-mechanical energy conversion element, and the second member is a contact body to be in contact with the elastic body.

22. The actuator according to Claim 21, wherein the control amount is a parameter that adjusts at least one of a frequency, a phase difference, and an amplitude of a voltage to be applied to the electro-mechanical energy conversion element.

23. A control apparatus configured to control an actuator including a first member, a second member configured to operate by driving of the first member, and a measurement unit configured to measure a state of the second member, the control apparatus comprising:
a quantum-driven control unit configured to, with a signal based on a target state indicated in an instruction issued by an instruction unit and the measured state as input, calculate a control amount for driving the first member by a quantum operation; and
an output unit configured to output the control amount,
wherein the second member operates by driving of the first member with the control amount as input.

24. The control apparatus according to Claim 23, wherein the quantum-driven control unit outputs the control amount based on a quantum gate operation using a quantum bit.

25. The control apparatus according to Claim 24, wherein the quantum-driven control unit includes a communication unit connectable to an external server, and wherein the quantum gate operation using a quantum computer is executed via the external server.

26. The control apparatus according to Claim 24,
wherein the quantum-driven control unit includes a memory, and
wherein a computer based on a binary arithmetic executes the quantum gate operation via an external server by using a quantum computer, and information about an operation result is written in the memory.

27. A system comprising:
a first member;
a second member configured to operate by driving of the first member; and
a control apparatus according to Claim 23 or 24.

28. The system according to Claim 27, further comprising a measurement unit configured to measure a state of the second member.

29. An electronic apparatus comprising:
a third member; and
an actuator according to Claim 1 or 2 provided in the third member, or a control apparatus according to Claim 23 or 24 configured to cause the third member to operate.

30. An optical apparatus comprising:
an optical element; and
an actuator according to Claim 1 or 2, the actuator being configured to cause the optical element to operate by operation of the contact body.

31. An image capturing apparatus comprising:
an image pickup element;
an optical element; and
an actuator according to Claim 1 or 2, the actuator being configured to cause the optical element or the image pickup element to operate.

32. A stage comprising:
a placement unit; and
an actuator according to Claim 1 or 2, the actuator being configured to cause the placement unit to operate.

33. A control method for controlling an actuator including a first member, a second member configured to operate by driving of the first member, and a measurement unit configured to measure a state of the second member, the control method comprising:
executing, by a control unit, a quantum-driven control step of, with a signal based on a target state indicated in an instruction issued by an instruction unit and the measured state as input, outputting a control amount for driving the first member by a quantum operation; and
executing, by the control unit, an operation step of, with the control amount as input, operating the second member by driving of the first member.

34. The control method according to Claim 33, wherein the quantum-driven control step includes a step of outputting the control amount based on a quantum gate operation using a quantum bit.

35. The control method according to Claim 34, wherein the quantum-driven control step includes a step of communicating with an external server and executing the quantum gate operation using a quantum computer via the external server.

36. The control method according to Claim 34, wherein in the quantum-driven control step, a computer based on a binary arithmetic executes the quantum gate operation by using a quantum computer via an external server, and information about an operation result is written in a memory.

37. A program for causing a control apparatus to execute each step according to Claim 33 or 34.

38. A computer-readable non-transitory storage medium storing a program according to Claim 37.
